(19)

Europäisches
Patentamt
European
Patent Office
Office européen
des brevets

(11) **EP 2 383 544 A1**

(12) **EUROPEAN PATENT APPLICATION**

(43) Date of publication:
**02.11.2011 Bulletin 2011/44**

(51) Int Cl.:
*G01D 5/347* (2006.01)  *G01D 5/244* (2006.01)

(21) Application number: **11003455.0**

(22) Date of filing: **27.04.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **28.04.2010 JP 2010104328
13.04.2011 JP 2011089011**

(71) Applicant: **Mitutoyo Corporation
Kawasaki, Kanagawa 213-8533 (JP)**

(72) Inventors:
• **Kawatoko, Osamu
Kawasaki, Kanagawa 213-8533 (JP)**
• **Kobayashi, Hirokazu
Kawasaki, Kanagawa 213-8533 (JP)**

(74) Representative: **Müller-Boré & Partner
Patentanwälte
Grafinger Straße 2
81671 München (DE)**

(54) **Optical encoder**

(57)     An optical encoder includes a scale; a light source; a plurality of light receiving element arrays (three light receiving element arrays) receiving via the scale light emitted from the light source; and a measurer. The first and the third light receiving element arrays are each divided into two areas. The measurer includes an abnormality determiner determining whether an abnormality has occurred in the areas based on signals output from the areas, and a location measurer measuring a location of the scale based on signals output from the areas (for which the abnormality determiner has determined that an abnormality has not occurred) and the second light receiving element array.

Fig. 1

EP 2 383 544 A1

**Description**

BACKGROUND OF THE INVENTION

1. Field of the Invention

The present invention relates to an optical encoder.

2. Description of Related Art

Conventionally, an optical encoder is known which includes a scale having a grid-like scale marking formed along a predetermined direction; a light source emitting light to the scale; a light receiving element array including a plurality of light receiving elements arranged along the predetermined direction to output a signal based on light received via the scale; and a measurer measuring a location of the scale, based on the signal output from the light receiving element array (for example, see Japanese Patent Laid-Open Publication No. 2009-198318).

The photoelectric encoder (optical encoder) disclosed in Japanese Patent Laid-Open Publication No. 2009-198318 is configured to be an absolute encoder. On the scale of this photoelectric encoder, an absolute pattern (scale marking) for measuring an absolute location and an incremental pattern (scale marking) for measuring a relative location are formed along a predetermined direction. The absolute pattern and the incremental pattern are patterns that transmit or block light emitted from the light source to generate light and dark sections. The photoelectric encoder includes a plurality of photodiode arrays (light receiving element arrays) arranged corresponding to the absolute pattern and the incremental pattern, and a signal processing circuit (measurer) measuring the location of the scale based on a signal output from the photodiode arrays.

Here, the photoelectric encoder disclosed in Japanese Patent Laid-Open Publication No. 2009-198318, for example, measures an absolute location of the scale by making the absolute pattern a pattern of an M-sequence random number. On the other hand, a linear encoder disclosed in Japanese Patent Laid-Open Publication No. 2010-25879 measures an absolute location of a scale by making an upper track (absolute pattern) an equally spaced pattern. In the following, an optical encoder is explained which measures an absolute location of a scale by making an absolute pattern an equally spaced pattern.

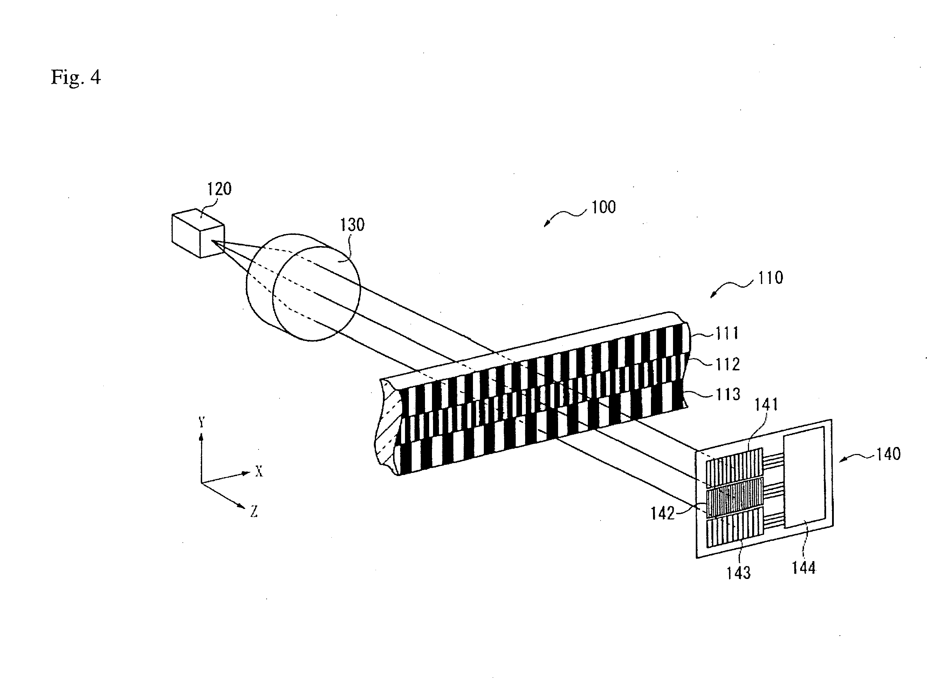

Fig. 4 is a pattern diagram illustrating an optical encoder 100 in which an absolute pattern is made an equally spaced pattern. In Fig. 4, an axis perpendicular to a plane of the paper is a Y axis, and two axes perpendicular to the Y axis are X and Z axes. The optical encoder 100 is configured to be an absolute encoder, and, as Fig. 4 illustrates, includes a scale 110; a light source 120; a lens 130 making light emitted from the light source 120 parallel light; and a circuit board 140 including a plurality of light receiving element arrays 141 - 143 and a measurer 144 measuring a location of the scale 100 based on signals output from the light receiving element arrays 141 - 143.

The scale 110 includes absolute patterns 111 and 113 formed along the X axis direction for measuring an absolute location of the scale 110, and an incremental pattern 112 formed between the absolute patterns 111 and 113 along the X axis direction for measuring a relative location of the scale 110. A light-dark period of the absolute pattern 111 is set to be slightly shorter as compared to a light-dark period of the absolute pattern 113. And, a light-dark period of the incremental pattern 112 is set to be shorter as compared to the light-dark periods of the absolute patterns 111 and 113.

The light receiving element arrays 141 and 143 output signals based on light emitted from the light source 120 and received via the absolute patterns 111 and 113. The light receiving element array 142 outputs a signal based on light emitted from the light source 120 and received via the incremental pattern 112.

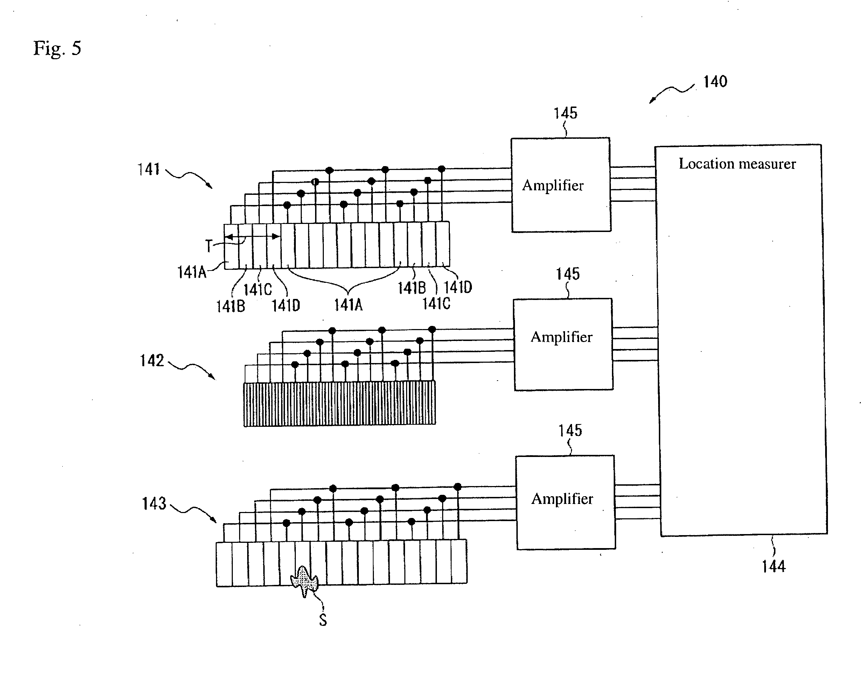

Fig 5 is a pattern diagram illustrating the circuit board 140 of the optical encoder 100. The light receiving element arrays 141 - 143 are formed with a plurality of groups each of which includes light receiving elements arranged at equal spacing, and are configured to output by combining signals output from the light receiving elements for each group. Specifically, for example, as Fig. 5 illustrates, in the light receiving element array 141, outputs are combined from a plurality of light receiving elements 141A, which are arranged at every 4 intervals. Outputs from light receiving elements 141B - 141D are also combined, similar to the light receiving elements 141A. Further, signals output from the groups of light receiving elements 141A - 141D are input to the measurer 144 via amplifiers 145. That is, the light receiving element array 141 is formed with 4 groups each of which includes light receiving elements arranged at equal spacing.

Here, a period T of the groups in the light receiving element array 141, that is, the period T for which one cycle is from the light receiving element 141A to the light receiving element 141D, is set as the same as the light-dark period of the absolute pattern 111. Therefore, a signal output from the light receiving element array 141 is a 4-phase signal having a 90-degree phase difference. Configurations of the light receiving element arrays 142 and 143 are similar to that of the light receiving element array 141. Here, a period of the groups in the light receiving element array 142 is set to be the same as the light-dark period of the incremental pattern 112. A period of the groups in the light receiving element array 143 is set to be the same as the light-dark period of the absolute pattern 113. That is, the period of the groups in the light receiving element array 142 is set to be shorter as compared to the periods of the groups in the light receiving element arrays 141 and 143.

The measurer 144 converts the 4-phase signals output from the light receiving element arrays 141 - 143 to 2-phase signals, and, based on the 2-phase signals, generates respective phase signals corresponding to the absolute patterns 111 and 113 and the incremental pattern 112. Based on the phase signals corresponding to the absolute patterns 111 and 113 and the incremental pattern 112, the measurer 144 measures the location of the scale 110, similar to the linear encoder disclosed in Japanese Patent Laid-Open Publication No. 2010-25879.

However, in such an optical encoder 100, for example, there is a problem that an abnormality may occur in a signal output from the light receiving element arrays 141 - 143 when a shadow S falls on the light receiving element arrays 141 - 143 due to attachment of a foreign particle such as a piece of dirt and the like to the scale 110 or a breakage occurred to the scale 110. When an abnormality occurs in a signal output from the light receiving element arrays 141 - 143, there is a problem that the optical encoder 100 cannot perform an adequate measurement.

The period of the groups in the light receiving element array 142 is set to be shorter as compared to the periods of the groups in the light receiving element arrays 141 and 143. Therefore, there is a problem that an abnormality occurs easily especially in a signal output from the light receiving element arrays 141 and 143. This is because, as the period of the groups in a light receiving element array becomes shorter, the effect of the shadow S falling on the light receiving element arrays 141 - 143 (due to attachment of a foreign particle such as a piece of dirt and the like to the scale 110 or a breakage occurred to the scale 110) becomes larger.

SUMMARY OF THE DISCLOSURE

A non-limiting feature of the present disclosure is to provide an optical encoder capable of performing an adequate measurement even when an abnormality has occurred in a signal output from a light receiving element array.

A non-limiting feature of the optical encoder of the present invention includes a scale having a grid-like scale marking formed along a predetermined direction; a light source emitting light to the scale; a light receiving element array including a plurality of light receiving elements arranged along the predetermined direction and outputting a signal based on light received via the scale; and a measurer measuring a location of the scale, based on the signal output from the light receiving element array. The light receiving element array is divided into a plurality of areas. The measurer includes an abnormality determiner determining whether an abnormality has occurred in each of the areas based a signal output from each of the areas; and a location measurer measuring the location of the scale based on signals output from the areas for each of which it is determined by the abnormality determiner that an abnormality has not occurred.

According to such a configuration, the location measurer measures the location of the scale based on signals output from the areas for each of which the abnormality determiner has determined that an abnormality has not occurred, among the areas of the light receiving element array. Therefore, an adequate measurement can be performed even when an abnormality has occurred in a signal output from the light receiving element array due to attachment of a foreign particle such as a piece of dirt and the like to the scale or a breakage occurred to the scale.

In a non-limiting feature of the present invention, it is desirable that a gap is formed between the areas.

Here, a shadow falling on the light receiving element array, due to attachment of a foreign particle such as a piece of dirt and the like to the scale or a breakage occurred to the scale, moves with respect to the light receiving element array according the location of the scale. In the present invention, a gap is formed between the areas of the light receiving element array. Therefore, when a shadow falling on the light receiving element array is smaller than the gap, it can be prevented that the shadow falls straddling between the areas. Therefore, according to the present invention, a more adequate measurement can be performed even when an abnormality has occurred in a signal output from the light receiving element array due to attachment of a foreign particle such as a piece of dirt and the like to the scale or a breakage occurred to the scale.

In a non-limiting feature of the present invention, it is desirable that the scale marking is a pattern generating equally spaced light and dark sections in the light emitted from the light source; each of the areas is formed with a plurality of groups each of which includes the light receiving elements arranged at equal spacing, and is configured to output by combining signals output from the light receiving elements for each group; a period of the groups is set to be the same as a light-dark period generated by the scale marking; and the abnormality determiner determines whether an abnormality has occurred in each of the areas by comparing signals output from the groups.

In a non-limiting feature of the present invention, the scale marking is a pattern generating equally spaced light and dark sections in the light emitted from the light source. Therefore, the light received by the light receiving element array via the scale forms light and dark sections in a sinusoidal form along the predetermined direction at an acceptance surface of the light receiving element array. Here, the period of the groups in the light receiving element array is set to be the same as the light-dark period generated by the scale marking. Therefore, based on signals output from the groups in the light receiving element array, light and dark sections in a sinusoidal form formed on the acceptance surface of the light receiving element array can be reproduced.

Further, in a non-limiting feature of the present invention, signals output from the groups in the light receiving element array are signals that combine signals based on light received by the light receiving elements arranged at locations in the same phase as the light and dark sections in a sinusoidal form formed on the acceptance surface of the light receiving element array. Therefore, the abnormality determiner can easily determine whether an abnormality has occurred in each of the areas by comparing signals output from the groups in the light receiving element array.

BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:

Fig. 1 illustrates an optical encoder according to an embodiment of the present invention;
Fig. 2 is a pattern diagram illustrating a board of the optical encoder according to the embodiment of the present invention;
Fig. 3 is a pattern diagram illustrating a method for abnormality determination using 3-phase signals in an alternative example according to the present invention;
Fig. 4 is a pattern diagram illustrating an optical encoder in which an absolute pattern is made an equally spaced pattern; and
Fig. 5 is a pattern diagram illustrating a board of an optical encoder.

DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

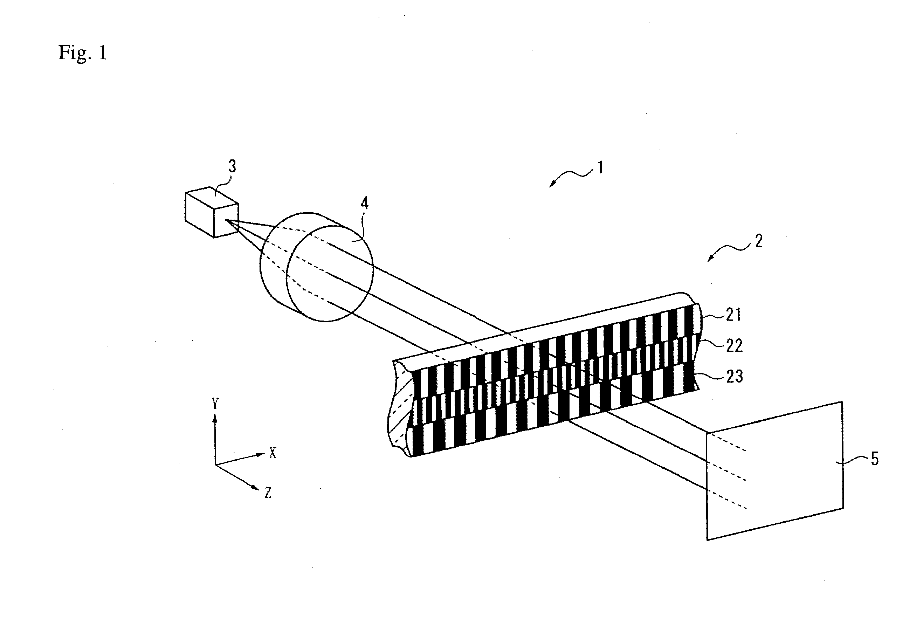

In the following, an embodiment of the present invention is explained based on the drawings. Fig. 1 illustrates an optical encoder 1 according to the embodiment of the present invention. In Fig. 1, an axis perpendicular to a plane of the paper is a Y axis, and two axes perpendicular to the Y axis are X and Z axes. The optical encoder 1 is configured to be an absolute encoder, and, as Fig. 1 illustrates, includes a rectangular plate-shaped scale 2 with a longitudinal direction in the X axis direction; a light source 3 emitting light to the scale 2; a lens 4 converting the light emitted from the light source 3 to parallel light; and a board 5 arranged at a subsequent stage of a light path of the light emitted from the light source 3 passing through the lens 4 and the scale 2.

The scale 2 is made of a transmissive material and has a grid-like scale marking formed along the X axis direction. Specifically, the scale 2 includes absolute patterns 21 and 23 as scale markings for measuring an absolute location, and an incremental pattern 22 formed between the absolute patterns 21 and 23 as a scale marking for measuring a relative location. The absolute patterns 21 and 23 and the incremental pattern 22 are patterns that transmit or block light emitted from the light source 3 to generate equally spaced light and dark sections. Further, a light-dark period of the absolute pattern 21 is set to be slightly shorter as compared to a light-dark period of the absolute pattern 23. And, a light-dark period of the incremental pattern 22 is set to be shorter as compared to the light-dark periods of the absolute patterns 21 and 23.

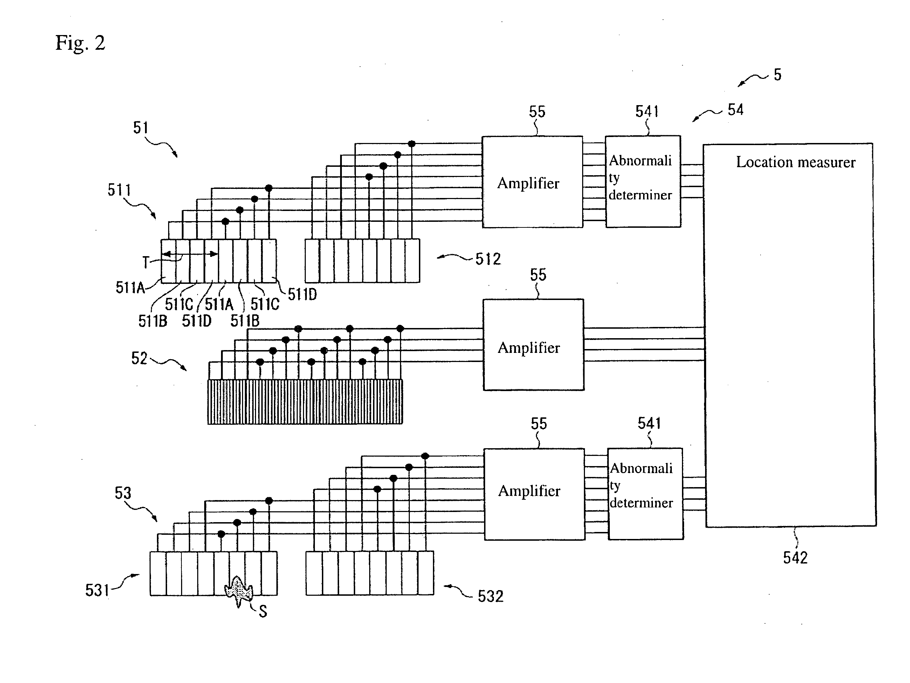

Fig. 2 is pattern diagram illustrating the board 5 of the optical encoder 1. As Fig. 2 illustrates, the board 5 has a plurality of light receiving element arrays 51 - 53, and a measurer 54 measuring a location of the scale 2 based on signals output from the light receiving element arrays 51 - 53. The light receiving element array 51 is divided into two areas 511 and 512, and a gap is formed between the areas 511 and 512. Similar to the light receiving element array 51, the light receiving array 53 is divided into two areas 531 and 532, and a gap is formed between the areas 531 and 532.

The areas 511 and 512, the light receiving element array 52 and the areas 531 and 532 are formed with a plurality of groups each of which includes light receiving elements arranged at equal spacing, and are configured to output by combining signals output from the light receiving elements for each group. Specifically, for example, in the area 511, outputs are combined from two light receiving elements 511A, which are separated by 4 intervals. Outputs from light receiving elements 511B-511D are also combined, similar to the light receiving elements 51 A. Further, signals output from the groups of the light receiving elements 511A-511D are input to the measurer 54 via an amplifier 55 formed from an operational amplifier and the like. That is, the area 511 is formed with 4 groups each of which includes light receiving elements arranged at equal spacing.

Here, a period T of the groups of the area 511, that is, the period T for which one cycle is from the light receiving element 511A to the light receiving element 511D, is set to be the same as the light-dark period of the absolute pattern 21. Therefore, signals output from the area 511 are 4-phase signals having a 90-degree phase difference. Configurations of the light receiving element array 52 and the areas 512, 531 and 532 are similar to that of the area 511. Here, a period of the groups in the area 512 is set to be the same as the light-dark period of the absolute pattern 21. A period of the groups in the light receiving element array 52 is set as the same as the light-dark period of the incremental pattern 22. A period of the groups in each of the areas 531 and 532 is set to be same as the light-dark period of the absolute pattern 23.

The measurer 54 includes abnormality determiners 541 determining whether an abnormality has occurred in the areas 511, 512, 531 and 532 based on signals output from the areas 511, 512, 531 and 532, and a location measurer 542 measuring a location of the scale 2 based on signals output from the light receiving element arrays 51 - 53. The abnormality determiners 541 determine whether an abnormality has occurred in the areas 511, 512, 531 and 532 by comparing signals output from the groups of the areas 511, 512, 531 and 532.

Here, the absolute patterns 21 and 23 are patterns for generating equally spaced light and dark sections in the light emitted from the light source 3. Therefore, light received by the light receiving element arrays 51 and 53 via the scale 2 form light and dark sections in a sinusoidal form along the predetermined direction at each of acceptance surfaces of the light receiving element arrays 51 and 53. As described above, signals output from the areas 511, 512, 531 and 532 are 4-phase signals having a 90-degree phase difference.

Therefore, adding up signals having a 180-degree phase difference, such as signals output from, for example, the light receiving elements 511A and the light receiving elements 511C, results in 0. Therefore, in the present embodiment, when adding signals having a 180-degree phase difference (among the 4-phase signals output from the groups of the areas 511, 512, 531 and 532) does not result in 0, the abnormality determiner 541 determines that an abnormality has occurred in the areas 511, 512, 531 or 532.

A circuit for performing an addition of signals, a comparison with a threshold, and the like, can be easily configured using hardware such as an operational amplifier, a comparator, and the like. When it is determined that an abnormality has not occurred in any of the areas 511 and 512, the abnormality determiner 541 combines signals output from the areas 511 and 512, and outputs. When it is determined that an abnormality has not occurred in any of the areas 531 and 532, the abnormality determiner 541 combines signals output from the areas 531 and 532, and outputs.

The location measurer 542 converts 4-phase signals output from the areas 511, 512, 531 and 532 (for which it has been determined by the abnormality determiners 541 that an abnormality has not occurred) and the light receiving element array 52 to 2-phase signals, and, based on the 2-phase signals, generates respective phase signals corresponding to the absolute patterns 21 and 23 and the incremental pattern 22. Based on the phase signals corresponding to the absolute patterns 21 and 23 and the incremental pattern 22, the location measurer 542 measures the location of the scale 2, similar to the linear encoder disclosed in Japanese Patent Laid-Open Publication No. 2010-25879.

The present embodiment as described above provides the following effects. (1) The location measurer 542 measures the location of the scale 2 based on signals output from the areas 511, 512, 531 and 532 for which the abnormality determiners 541 have determined that an abnormality has not occurred, among the areas 511, 512, 531 and 532 of the light receiving element arrays 51 and 53. Therefore, an adequate measurement can be performed even when an abnormality has occurred in a signal output from the light receiving element arrays 51 and 53 due to attachment of a foreign particle such as a piece of dirt and the like to the scale 2 or a breakage occurred to the scale 2.

(2) Gaps are formed between the areas 511, 512, 531 and 532 of the light receiving element arrays 51 and 53. Therefore, when a shadow S falling on the light receiving element arrays 51 and 53 is smaller than the gaps, it can be prevented that the shadow S falls straddling between the areas 511, 512, 531 and 532. Therefore, the optical encoder 1 can perform a more adequate measurement even when an abnormality has occurred in a signal output from the light receiving element arrays 51 and 53 due to attachment of a foreign particle such as a piece of dirt and the like to the scale 2 or a breakage occurred to the scale 2. (3) When adding signals having a 180-degree phase difference (among the 4-phase signals output from the groups of the areas 511, 512, 531 and 532) does not result in 0, the abnormality determiners 541 determine that an abnormality has occurred in the areas 511, 512, 531 or 532. Therefore, whether an abnormality has occurred in the areas 511, 512, 531 and 532 can be easily determined.

The present invention is not limited to the above described embodiment. Design changes, improvements, and the like, within the scope of achieving the purpose of the present invention, are included in the present invention. For example, in the above described embodiment, the light receiving element array 52 was not divided into a plurality of areas. However, it is also possible to divide it into a plurality of areas. In the above described embodiment, gaps were formed between the areas 511 and 512 and between the areas 531 and 532. However, it is also possible not to form the gaps.

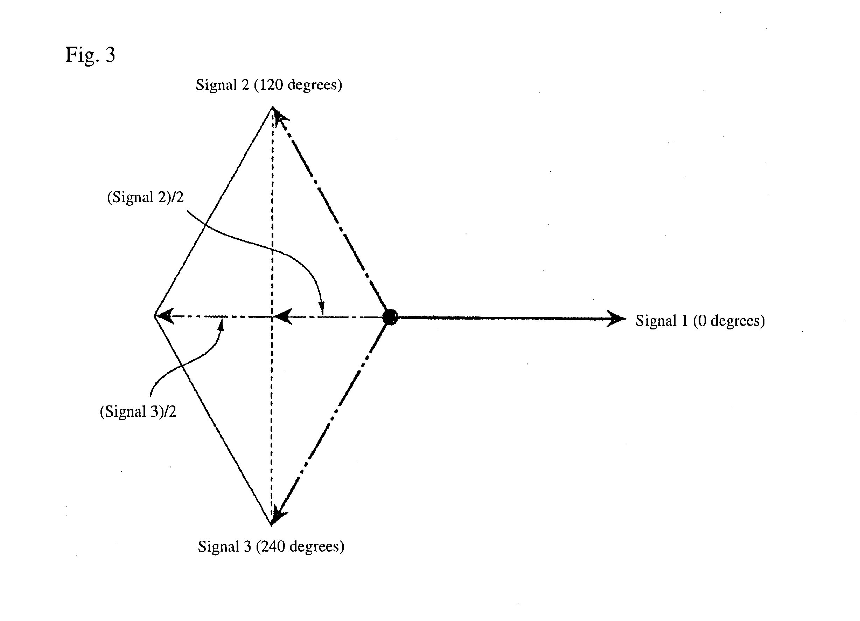

In the above described embodiment, when adding signals having a 180-degree phase difference (among the 4-phase signals output from the groups of the areas 511, 512, 531 and 532) does not result in 0, the abnormality determiners 541 determine that an abnormality has occurred in the areas 511, 512, 531 and 532. With respect to this point, for example, it is also possible that the abnormality determiners 541 determine whether an abnormality has occurred by adding all 4-phase signals output from the groups in each of the areas. Further, for example, it is also possible that the abnormality determiner 541 determines whether an abnormality has occurred by comparing the 4-phase signals output from the groups in each of the areas to a threshold. The point is that the abnormality determiner 541 determines whether an abnormality has occurred in each of the areas by comparing the signals output from the groups in each of the areas. In the present embodiment, the 4-phase signals output from the groups of the areas 511, 512, 531 and 532 are used to determine the abnormality of the areas 511, 512, 531 and 532. However, the present invention is not limited to the above embodiment. For example, a configuration may be made where a group of 2-3 signals (i.e., 2-phase signals having a 180-degree phase difference or 3-phase signals having a 120-degree phase difference) are output from each of the areas 511, 512, 531 and 532. In such a case, 2-phase signals or 3-phase signals are used to determine the abnormality of the areas 511, 512, 531 and 532. When determining an abnormality from 2-phase signals, it is possible to use the similar method as in the present embodiment. When determining an abnormality from 3-phase signals, the abnormality determiners may determine whether an abnormality has occurred, by checking whether or not the following formula can be established, where 3-phase signals having a 120-degree phase difference are identified as signal 1, signal 2, and signal 3, as shown in Fig. 3:

$$\text{Signal } 1 = (\text{Signal } 2) / 2 + (\text{Signal } 3) / 2$$

In other words, when there is no dirt or scale breakage, the above formula can be established. Therefore, it is possible to determine whether an abnormality has occurred by checking whether or not the above formula can be established.

In the above described embodiment, the period of the groups in the light receiving element arrays 51 — 53 was set to be the same as the light-dark period of the scale marking in the scale 2.

In the above described embodiment, the absolute patterns 21 and 23 and the incremental pattern 22 are patterns that transmit or block light emitted from the light source 3 to generate equally spaced light and dark sections. The light receiving element arrays 51 - 53 are formed with a plurality of groups each of which includes light receiving elements arranged at equal spacing, and are configured to output by combining signals output from the light receiving elements for each group. However, it is also possible to apply an optical encoder of another configuration to the present invention. In this case, the abnormality determiner 541 may determine an abnormality according to the configuration of the optical encoder. The point is that the abnormality determiner determines whether an abnormality has occurred in each area based on signals output from the each area of the light receiving element arrays.

In the above described embodiment, the optical encoder 1 was configured to be an absolute encoder. However, it is also possible to apply the present invention to an incremental encoder. Further, in the above described embodiment, the optical encoder 1 was configured to be a linear encoder. However, it is also possible to apply the present invention to a rotary encoder. In the above described embodiment, the optical encoder 1 is so configured that light transmitting through the scale 2 was received by the light receiving element arrays 51 — 53. With respect to this point, it is also possible to so configure the optical encoder that light reflected by the scale is received by the light receiving element arrays.

The present invention can be suitably used as an optical encoder.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

**Claims**

1. An optical encoder comprising:

a scale having a grid scale marking formed along a predetermined direction;
a light source configured to emit light to the scale;
a light receiving element array comprising a plurality of light receiving elements arranged along the predetermined direction and configured to output a signal based on light received via the scale, the light receiving element array divided into a plurality of areas; and
a measurer configured to measure a location of the scale based on the signal output from the light receiving element array, the measurer comprising:

an abnormality determiner configured to determine whether an abnormality has occurred in each of the areas based a signal output from each of the areas; and
a location measurer configured to measure the location of the scale based on the signal output from each of the areas for each of which it is determined by the abnormality determiner that an abnormality has not occurred.

2. The optical encoder according to claim 1, wherein a gap is formed between the areas.

3. The optical encoder according claim 1 or 2, wherein:

the scale marking is a pattern generating equally spaced light and dark sections in the light emitted from the light source,
each of the areas is formed with a plurality of groups, each of which includes the light receiving elements arranged at equal spacing, and is configured to output by combining signals output from the light receiving elements for each group,
a period of the groups is set to be the same as a light-dark period generated by the scale marking, and
the abnormality determiner is configured to determine whether an abnormality has occurred in each of the areas by comparing signals output from each of the groups.

Fig. 1

EP 2 383 544 A1

Fig. 2

Fig. 3

Fig. 4

Fig. 5

Europäisches
Patentamt

European
Patent Office

Office européen
des brevets

# EUROPEAN SEARCH REPORT

**Application Number**

EP 11 00 3455

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 821 075 A2 (MITUTOYO CORP [JP]) 22 August 2007 (2007-08-22) * the whole document * ----- | 1,2 | INV. G01D5/347 G01D5/244 |
| X | US 6 327 791 B1 (NORCROSS RICHARD J [US] ET AL) 11 December 2001 (2001-12-11) * abstract; figures 7-10 * ----- | 1-3 | |
| A | EP 1 701 138 A2 (MITUTOYO CORP [JP]) 13 September 2006 (2006-09-13) * abstract; figures 6-9 * ----- | 3 | |

TECHNICAL FIELDS
SEARCHED      (IPC)

G01D

The present search report has been drawn up for all claims

| Place of search | Date of completion of the search | Examiner |
|---|---|---|
| The Hague | 29 August 2011 | Amroun, Sébastien |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 11 00 3455

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2011

| Patent document cited in search report | | Publication date | Patent family member(s) | | Publication date |
|---|---|---|---|---|---|
| EP 1821075 | A2 | 22-08-2007 | CN | 101021425 A | 22-08-2007 |
| | | | JP | 2007218691 A | 30-08-2007 |
| | | | US | 2007187583 A1 | 16-08-2007 |
| US 6327791 | B1 | 11-12-2001 | NONE | | |
| EP 1701138 | A2 | 13-09-2006 | CN | 1831484 A | 13-09-2006 |
| | | | CN | 101487725 A | 22-07-2009 |
| | | | US | 2006202112 A1 | 14-09-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009198318 A

- JP 2010025879 A